(19) **Europäisches Patentamt**

**European Patent Office**

**Office européen des brevets**

(11) **EP 0 685 858 B1**

(12) **EUROPÄISCHE PATENTSCHRIFT**

(45) Veröffentlichungstag und Bekanntmachung des Hinweises auf die Patenterteilung:
**17.05.2000 Patentblatt 2000/20**

(21) Anmeldenummer: **94907736.6**

(22) Anmeldetag: **14.02.1994**

(51) Int. Cl.$^7$: **H01G 9/00**

(86) Internationale Anmeldenummer:
**PCT/RU94/00026**

(87) Internationale Veröffentlichungsnummer:
**WO 94/19812 (01.09.1994 Gazette 1994/20)**

(54) **KONDENSATOR MIT EINER ELEKTRISCHEN DOPPELSCHICHT**

CAPACITOR WITH A DOUBLE ELECTRICAL LAYER

CONDENSATEUR A DOUBLE COUCHE ELECTRIQUE

(84) Benannte Vertragsstaaten:
**AT CH DE ES FR GB IT LI SE**

(30) Priorität: **16.02.1993 RU 9308795**

(43) Veröffentlichungstag der Anmeldung:
**06.12.1995 Patentblatt 1995/49**

(73) Patentinhaber:
**AKTSIONERNOE OBSCHESTVO "ELIT"
305013 (RU)**

(72) Erfinder:
- **BELYAKOV, Alexei Ivanovich
  Kursk, 305045 (RU)**
- **BRYNTSEV, Alexandr Mikhailovich
  Kursk, 305007 (RU)**

- **GORIDOV, Sergei Ivanovich
  Kursk, 305025 (RU)**
- **KHOVYAKOV, Igor Fedorovich
  Kursk, 305018 (RU)**

(74) Vertreter:
**Beetz & Partner
Patentanwälte
Steinsdorfstrasse 10
80538 München (DE)**

(56) Entgegenhaltungen:
**EP-A- 0 415 096        EP-A- 0 416 790
EP-A- 0 514 545        WO-A- 92/12521
DE-A- 4 103 395        US-A- 5 115 378
US-A- 5 136 473**

**Beschreibung**

Die Erfindung bezieht sich auf einen Doppelschicht-Kondensator, bestehend aus einem Gehäuse, im Schichtaufbau angeordneten polarisierbaren Kohleelektroden und metallischen Kollektorlamellen sowie aus einem mit wässrigen Elektrolyten getränkten separator.

Vorbekannt ist ein Kondensator mit einer elektrischen Doppelschicht (DES), der ein Gehaeuse, in diesem unter Druck fixierte kollektorlamellen polarisierbare Kohlenelektroden, Separatoren, die mit waessrigem Elektrolyt durchtraenkt sind, aufweist (vgl. wissenschaftlich-technische Referatsammlung "Elektrotechnische Industrie", Serie "Chemische und physicalische Stromquellen", M., 1984, Auflage 1 (94), Seite 13). Dieser Kondensator hat einen großen inneren Widerstand, der 2 bis 10 Ohm pro cm2 betraegt. Er wird durch den hohen Volumenwiderstand der Kollektorlamellen aus mit Graphit (Russ) hochgefuelltem Gummi bedingt, was um 3-4 Ordnungen hoeher liegt als der Widerstand der Metalle.

Aus der JP-A 60-26285 ist ein Doppelschicht-Kondensator bekannt, der ein Gehaeuse, in diesem unterm Druck fixierte metallische Kollektarlamellen aus Aluminium, polarisierbare Kohlenelektroden und mit Elektrolyt durchtraenkte Separatoren enthaelt. Bei diesem bekannten Kondensator ist der innere Widerstand genauso gross. Die Verwendung des Aluminiums schliesst die Moeglichkeit der Verwendung von hochleitenden waessrigen Elektrolyten aus, und die nicht waessrigen Loesungen von Elektrolyten weisen einer specifischen Widerstand auf, der um das 12 bis 40-fache groesser ist. Die Groesse des inneren Widerstandes in solchen Systemen betraegt mehr als 8 Ohm pro cm2.

Aus der WO92/12521 ist ein weiterer Doppelschicht-Kondensator bekannt, der einen mittleren mehrschichtigen Separator, zu beiden Seiten dieses Separators je eine schichtförmige Elektrode und an deren Außenseiten je einen Deckel aus dünnen Ni- od. Fe- Werkstoff aufweist. Die Elektroden werden durch Abscheidung von aktivierten Kohlenstoff aus einer Suspension auf einem Substrat aus mineralfasern hergestellt.

Schließlich ist in der US-A 5 115 378 ein Doppelschicht-Kondensator beschrieben, bei dem in einem Gehäuse polarisierbare Kohleelektroden angeordnet sind, die durch mit einem wäßrigen Elektrolyten durchtränkte Separatoren voneinander getrennt sind und mit metallischen Kollektorlamellen in Verbindung stehen. Die elektrische Verbindung zwischen den Kollektorlamellen und den Kohleelektroden erfolgt über elektrisch leitende Zwischenschichten die bei der Herstellung der Kohleelektrode auf deren Außenseiten festhaftend aufgebracht werden.

Aufgabe der Erfindung ist einen Doppelschicht-Kondensators zu schaffen der, welcher im Vergleich zu den bekannten Kondensatoren dieser Reihe einen minimalen inneren widerstand aufweist.

Diese Aufgabe wird durch die im Patentanspruch angegebenen merkmale gelöst.

Auf grund der Versuche wurde festgestellt, dass die Groesse des inneren Widerstandes von KDES in bedeutendem Ausmass von dem Kontaktwiderstand zwischen der polarisierbaren Elektrode und dem Kollektor bestimmt wird.

Wenn als polarisierbare Elektrode der Kohlenstoff (Sorptionsmittel) verwendet wird, so haengt die Groesse des Kontaktwiderstandes von der Flaeche der Kontakte zwischen den Kohlenstoffteilchen und dem Kollektor ab. Diese Flaeche haengt ihrerseits bei der vorgegebenen Ändrueckkraft der polarisierbaren Elektrode an den Kollektor von der Mikrohaerte des Sorptionsmittels und des Kollektors ab. Die Groesse der Andrueckkraft wird von der Festigkeit der Werkstoffe der KDES (Kondensatoren mit einer elektrischen Doppelschicht) limitiert.

In dem oben erwaehnten Prototyp-Kondensator wird die Groesse des Kontaktwiderstandes von dem Bereich des Kontaktes der Kohleteilchen mit dem Kollektor aus Aluminium bestimmt. Bei der Weichheit des hauptsaechlichen Werkstoffes weist seine Oberflaeche, die unter den beliebigen Bedingungen (ausser Vakuum) aus Aluminiumoxid (Korund) besteht, eine hohe Mikrohaerte auf. Aus diesem Grunde ist die Beruehrungsflaeche des Kohlefragmentes mit dem Metall sogar bei den grossen Kraeften der Kontraktion punktfoermig und begrenzt den Durchlass von grossen Stroemen.

Das technische Ergebnis, das bei der Durchfuehrung der Erfindung erhalten ist, ist ein Hochleistungskondensator mit DES, der es erlaubt, grosse Stromimpulse in der Entladung durch einen niedrigen inneren Widerstand zu realisieren.

Das erwaehnte technische Ergebnis wird dadurch erreicht, dass in dem bekannten Kondensator mit DES, der ein Gehaeuse, in diesem unter Druck fixierte metallische Kollektorlamellen, polarisierbare Kohlenelektroden, mit Elektrolyt durchtraenkte Separatoren umfasst, die Kollektorlamellen aus Metallen ausgebildet sind, bei denen die Mikrohaerte der Oberflaeche niedriger ist, als die Haerte des Werkstoffes der polarisierbaren Elektroden, und die gegen den waessrigen Elektrolyt elektrochemisch bestaendig sind.

Durch den angemeldeten Kondensator mit DES wird eine Herabsetzung des inneren Widerstandes infolge der Vergroesserung der Beruehrungsflaeche zwischen der Kollektorlamelle und der Kohlenelektrode sichergestellt. Das ist vom Eindruecken der Fragmente der Kohlenelektrode in den weicheren Werkstoff der Kollektorlamelle hervorgerufen.

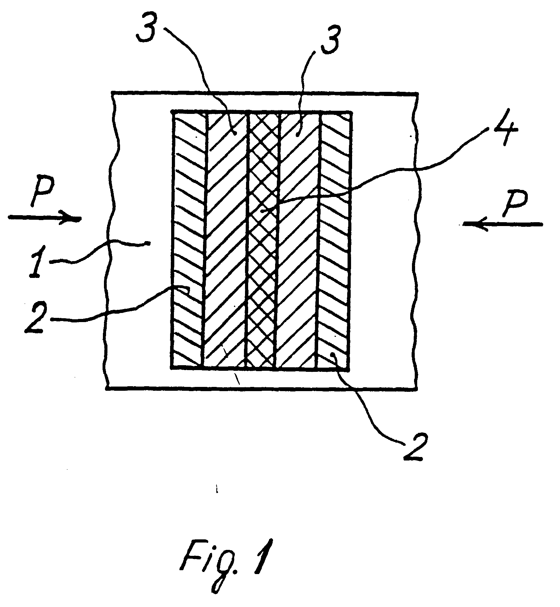

Kurze Beschreibung der Zeichnung

In der Zeichnung ist schematisch der anmeldungsgemaesse Kondensator dargestellt.

Beste Variante der Erfindungsdurchfuehrung

Der Kondensator mit einer elektrischen Doppelschicht umfasst ein Gehaeuse 1, in diesem unterm Druck fixierte metallische Kollektorlamellen 2, polarisierbare Kohlenelektroden 3, einen mit waessrigem Elektrolyt durchtraenkten Separator 4.

Die Anwesenheit der hochleitenden waessrigen Elektrolyte gewaehrleistet einen niedrigen spezifischen Widerstand.

Die Kollektorlamellen sind aus Metall ausgefuehrt, bei dem die Mikrohaerte der Oberflaeche niedriger ist, als die Haerte des Werkstoffes der polarisierbaren Elektroden.

Die Anwesenheit des staendig wirkenden Druckes - der Druckbeanspruchung P zwischen den Kollektorlamellen und den polarisierbaren Elektroden - ist durch den Zusammenbau des Kondensators bedingt, und der Unterschied der Haerte der zusammengedrueckten Teile vergroessert die Kontaktflaeche zwischen den Kollektorlamellen und den polarisierbaren Elektroden. Das wird durch die Umhuellung der Teile des polarisierbaren Werkstoffes mit einer weicheren Kollektorlamelle und durch die Vergroesserung der Stromuebertragungsflaeche bestimmt.

Der anmeldungsgemaesse Kondensator mit den im Hinblick auf die Mikrohaerte gegenseitig abgestimmten Werkstoffen der polarisierbaren Elektrode und des Kollektors weist wesentliche Vorteile gegenueber dem Prototyp-Kondensator auf, und naemlich:

- er erlaubt es, die Werkstoffe fuer den Kollektor und die polarisierbare Elektrode zwecks Erhalten der vorgegebenen Groesse des inneren Widerstandes zweckmaessig und objektiv auszuwaehlen;
- bei den vorgegebenen Groessen des inneren Widerstandes und der Spannung werden die Kondensatoren mit den Kollektoren mit einer kleinen Haerte eine kleinere Masse und Abmessungen infolge der kleineren Zahl von parallel verbundenen Zellen haben;
- infolge der Sicherstellung eines kleinen inneren Widerstandes werden verbesserte elektrische Charakteristiken erreicht:

a) die maximale Spannung (R) der Belastung, die an den Kondensator angeschaltet ist, laut der Formel

$$U_H = \frac{U}{1 + \dfrac{r}{R}}$$

wo U - Spannung an den Kondensatorklemmen bei abgeschalteter Belastung; r - Groesse des inneren Widerstandes;

b) der maximale Kurzschlussstrom, was in den Starterspeichern erforderlich ist;

c) die maximale Leistung (W), die fuer die Belastung (R) abgegeben wird, und der Wirkungsgrad (K) des Speichers in Uebereinstimmung mit den Formeln

$$W = \frac{U^2 R}{(R + r)^2} \qquad\qquad K = \frac{R}{R + r}$$

3

Industrielle Anwendbarkeit

Der Bereich der moeglichen Anwendungen von KDES (Kondensatoren mit einer elektrischen Doppelschicht) ist ueberaus breit - von der elektronischen Schwachstromtechnik bis zu den stationaeren und transportablen elektrischen Starkstromsystemen.

Sie sind sowohl als eigentliche Kondensatoren als auch als Energiespeicher (NE) wirksam.

Als Kondensatoren koennen KDES, die eine kleinere Masse und Abmessungen im Vergleich zu den Kondensatoren anderer Type aufweisen, in den Glaettungsfiltern der Gleichstromquellen, in den leistungsstarken integrierenden und differenzierenden Kreisen als Elemente mit einem kleinen Blind-und Wirkwiderstand bei den Niederfrequenzstroemen, in den Systemen zum Schutz von Supraleitungsmagneten ihre Anwendung finden.

Speicher - KDES mit einem geringen inneren Widerstand koennen als selbstaendige Stromquellen anstelle von anderen Quellen sowie im Puffer mit den anderen Gleichstromquellen verwendet werden.

Entwickelt und hergestellt werden Zugfoerderung- und Starter-Energiespeicher vom Kondensatortyp (NEKT) auf der Basis von KDES.

Die Zugfoerderungs-NEKT koennen fuer Elektrokarren, Elektroroboterkarren, Lader, Selbstfahrer fuer Invaliden, Schubkarren in Krankenhaeusern, Flughaefen u.a. fuer die Rueckgewinnung der Bremsenergie vom Transport verwendet werden. Die Zugfoerderungs-NEKT werden fuer Durchstarten der Verbrennungsmotore von PKW's und LKW's, Schlepper u.a. unter den schweren Bedingungen (Frost bis zu -50 Grad.C, Verdicken des Schmierstoffes) verwendet.

NEKT sind zum Unterschied von den Akkumulatoren oekologisch rein, beduerfen keiner Wartung im Laufe der ganzen Lebensdauer, vertragen den Kurzschluss.

Zur Zeit ist fuer NEKT der Spannungebereich von 0,5 ... 100 V, der Bereich des Kurzschlussstroms - bis 30 kA, der Bereich der Energiereserve - bis 100 kJ erschlossen.

Bei den gleichen Masse und Abmessungen liegt die Energiereserve von NEKT der Energiereserve der Akkumulatoren nahe.

Der Betrieb des Kondensators mit einer elektrischen Doppelschicht (DES) erlaubt es, die grossen Stromimpulse in der Entladung durch den niedrigen inneren Widerstand zu realisieren. Das ist durch die Vergroesserung der Kontaktflaeche zwischen der Kollektorlamelle und der Kohlenelektrode sowie durch die Ausnutzung des waessrigen Elektrolyts bedingt, der eine hohe Leitfaehigkeit sicherstellt.

**Patentansprüche**

1. Doppelschicht-Kondensator, bestehend aus einem Gehäuse (1), im Schichtaufbau angeordneten polarisierbaren Kohleelektroden (3) und metallischen Kollektorlamellen (2) sowie aus einem mit einem wäßrigen Elektrolyten getränkten Separator (4),
   wobei das Metall der Kollektorlamellen (2) gegenüber dem wäßrigen Elektrolyt elektrochemisch beständig ist
   wobei die Schichtkonstruktion aus den Kollektorlamellen (2), den Kohleelektroden (3) und dem Separator (4) unter einem Zwischen den Kollektorlamellen (2) und den Kohleelektroden (3) ständig wirksamen Druck P im Gehäuse (1) fixiert ist,

   - wobei die Kollektorlamellen (2) aus einem Metall bestehen, dessen Mikrohärte seiner Oberflächen kleiner als die Härte der die Kollektorlamellen direkt kontaktierenden Kohlenstoffelektroden (3) ist, und

   - wobei die Berührungsflächen zwischen den Kollektorlamellen (2) und den Kohleelektroden (3) durch Eindrükken der Kohlepartikel in den weicheren Metallwerkstoff der Kollektorlamellen gebildet sind.

**Claims**

1. A double-layer capacitor comprising a casing (1), polarisable carbon electrodes (3) and metal collector segments (2) disposed in layers and a separator impregnated with an aqueous electrolyte,
   wherein the metal of the collector segments (2) is electrochemically stable against the aqueous electrolyte,
   wherein the layer construction comprising the collector segments (2), the carbon electrodes (3) and the separator (4) is fixed in the casing (1) at a pressure (P) operative between the collector segments (2) and the carbon electrodes (3),
   wherein the collector segments (2) are made of a metal having a surface micro-hardness less than the hardness of the carbon electrodes (3) in direct contact with the collector segments, and
   wherein the contact surfaces between the collector segments (2) and the carbon electrodes (3) are formed by pressing the carbon particles into the softer metal of which the collector segments are made.

**Revendications**

1. Condensateur électrique à double couche, constitué par un logement (1), des électrodes au carbone (3) polarisables disposées en couches et des lamelles de collecteur métalliques (2) ainsi qu'un séparateur (4) imprégné d'un électrolyte aqueux, le métal des lamelles du collecteur (2) étant résistant électrochimiquement par rapport à l'électrolyte aqueux, la structure de couche constituée par les lamelles de collecteur (2) des électrodes au carbone (3) et le séparateur (4) étant fixés sous une pression P efficace de façon continue entre les lamelles de collecteur (2) et les électrodes de carbone (3) dans le logement (1) ;

   les lamelles de collecteur (2) consistant en un métal dont la microdureté de sa surface est inférieure à la dureté des électrodes au carbone (3) venant en contact direct avec les lamelles du collecteur, et
   les faces de contact entre les lamelles de collecteur (2) et les électrodes au carbone (3) étant formées par injection de particules de carbone dans le matériau métallique plus mou des lamelles de collecteur.

Fig. 1